# EUROPÄISCHE PATENTSCHRIFT

(11) **EP 0 383 133 B1**
(45) Veröffentlichungstag und Bekanntmachung des Hinweises auf die Patenterteilung: **11.05.1994**
(21) Anmeldenummer: 90102190.7
(22) Anmeldetag: 03.02.1990
(51) Int. Cl.: C08J 9/14, C08J 9/16, C08L 25/04

(54) **Perlförmige expandierbare Formmassen mit hoher Wärmeformbeständigkeit und Verfahren zu ihrer Herstellung**
Expandable pearly moulding compositions with a higher heat distortion resistance, and process for their preparation
Compositions de perles expansibles à résistance à la déformation à la chaleur améliorée et leur procédé de préparation

(30) Priorität: 14.02.1989 DE 3904370
(43) Veröffentlichungstag der Anmeldung: 22.08.1990
(73) Patentinhaber: BASF Aktiengesellschaft, 67063 Ludwigshafen (DE)
(72) Erfinder: Hahn, Klaus, Dr., D-6719 Kirchheim (DE); Guhr, Uwe, Dr., D-6718 Grünstadt (DE); Hintz, Hans, Dr., D-6700 Ludwigshafen (DE); Gellert, Roland, Dr., D-6730 Neustadt (DE)

(56) Entgegenhaltungen:
- EP-A- 0 241 258
- EP-A- 0 265 788
- EP-A- 0 294 783
- EP-A- 0 343 473

## Beschreibung

Schaumstoffe auf Basis eines Gemisches aus Styrolpolymerisaten und Polyphenylenethern zeichnen sich durch hohe Wärmeformbeständigkeit aus.

Gemäß der DE-A-32 20 856 werden derartige Schaumstoffe durch Aufschmelzen des Gemisches, Vermischen mit einem Treibmittel unter Druck und Entspannen der Mischung hergestellt. Nach diesem Verfahren können keine Formteile beliebiger Gestalt hergestellt werden.

In der JP-A-52-101268 wird ein expandierbares Granulat durch Imprägnierung eines Polystyrol-Polyphenylenether-Granulats mit weniger als 3 % eines Treibmittels hergestellt. Derartiges Granulat weist eine zylindrische Form auf. Versucht man durch Expandieren des Granulats und anschließendes Verschweißen der zylindrischen Schaumstoffpartikel Formteile herzustellen, so weisen letztere einen hohen Gehalt an Lunkern und Fehlstellen auf, bedingt durch das hohe Zwickelvolumen einer Schüttung der Schaumstoffpartikel und ihre unbefriedigende Rieselfähigkeit.

In der EP-A-241 258 wird die Herstellung von Schaumstoffpartikeln durch Extrusion eines Polystyrol-Polyphenylenether-Treibmittel-Gemisches und Zerkleinern des erhaltenen Schaumstoffstrangs beschrieben. Auch derartige Partikel sind nicht geeignet für die Herstellung von Formteilen, da aufgrund des hohen Zwickelvolumens die Formteile nicht frei von Lunkern erhalten werden können.

Aus der EP-A-0 294 783 sind expandierbare thermoplastische Harzteilchen bekannt, die durch Polymerisation einer wäßrigen Suspension von 1 bis 50 Gew.-Teilen eines Polyphenylenethers und 99 bis 50 Gew.-Teilen Styrol und gleichzeitiges oder anschließendes Imprägnieren mit einem leichtflüchtigen Kohlenwasserstoff oder Halogenkohlenwasserstoff-Treibmittel hergestellt wurden. Damit erhaltene Formkörper weisen eine hohe Wärmeformbeständigkeit und Beständigkeit gegenüber Chemikalien auf (z.B. Ölbeständigkeit).

Der Erfindung lag die Aufgabe zugrunde, expandierbare Formmassen bereitzustellen, die für die Herstellung von lunkerfreien Schaumstoff-Formteilen geeignet sind. Ferner war es Aufgabe der Erfindung, die Ölbeständigkeit derartiger Schaumstoffe zu verbessern. Schließlich war auch noch die Aufgabe zu lösen, die Schaumstoffpartikel in ihrer Rieselfähigkeit zu verbessern und bei der Herstellung die Verwendung teurer Extrudiervorrichtungen zu vermeiden.

Demgemäz wurden perlförmige expandierbare Formmassen mit hoher Wärmeformbeständigkeit gefunden, enthaltend
a) 80 bis 99 Gew.-% mindestens eines Styrolpolymerisats
b) 1 bis 20 Gew.-% Poly-(2,6-dimethyl)-1,4-phenylenether
c) 3 bis 10 Gew.-%, bezogen auf die Summe von a) und b) eines C₃- bis C₆-Kohlenwasserstoffs als Treibmittel, und gegebenenfalls f
d) übliche Zusatzstoffe in wirksamen Mengen,
wobei als Komponente a) ein Gemisch verwendet wird aus
a1) 50 bis 83 Gew.-% Polystyrol und
b2) 17 bis 50 Gew.-% eines styrollöslichen Styrol-Acrylnitril-Copolymeren, wobei der Gehalt an Acrylnitril, bezogen auf die Summe von a1) und a2) mindestens 5 Gew.-% beträgt.

Gegenstand der Erfindung ist ferner ein Verfahren zur Herstellung dieser expandierbaren Formmassen, das dadurch gekennzeichnet ist, daß man eine Lösung von Poly-(2,6-dimethyl)-1,4-phenylenether und Styrol-Acrylnitril-Copolymeren in Styrol in wäßriger Suspension polymerisiert und während oder nach der Polymerisation das Treibmittel zufügt.

Ein wesentliches Merkmal der neuen expandierbaren Formmassen ist ihre Perlform. Die Form ist bedingt durch die Herstellung mittels Suspensionspolymerisation. Die Partikel liegen in annähernd kugelförmiger Gestalt vor. Die Perlen haben einen mittleren Durchmesser zwischen etwa 0,1 und 6 mm, vorzugsweise zwischen 0,2 und 4 mm, insbesondere zwischen 0,3 und 3 mm.

Styrolpolymerisate a), die mindestens 5 Gew.-%, im allgemeinen 5-17 Gew.-%, vorzugsweise 5-10 Gew.-% Acrylnitril einpolymerisiert enthalten, führen zu Formmassen, die sich durch eine hohe Ölbeständigkeit auszeichnen. Hierzu setzt man als Styrolpolymerisat ein Gemisch aus Polystyrol und einem styrollöslichen Styrol-Acrylnitril-Copolymeren ein, insbesondere ein Gemisch aus 50-83 Gew.-%, vorzugsweise 60-80 Gew.-% Polystyrol und 17-50 Gew.-%, insbesondere 20-40 Gew.-% eines Styrol-Acrylnitril-Copolymeren mit einem Gehalt an einpolymerisiertem Acrylnitril von etwa 15-35 Gew.-%, insbesondere 20-30 Gew.-%, ein.

Das Styrolpolymerisat a) wird verwendet in Mengen von 80-99 Gew.-%, vorzugsweise 85-98 Gew.-%, insbesondere 90-97 Gew.-%, bezogen auf die Summe von a) und b).

Die expandierbaren Formmassen enthalten als weiteren Bestandteil b) 1 bis 20 Gew.-%, vorzugsweise 2 bis 15 Gew.-%, insbesondere 3 bis 10 Gew.-% Poly-(2,6-dimethyl)-1,4-phenylenether.

Als Treibmittel enthalten die Formmassen 3 bis 10 Gew.-%, vorzugsweise 5 bis 8 Gew.-%, eines C₃- bis C₆-Kohlenwasserstoffs, wie Propan, Butan, Isobutan, n-Pentan, i-Pentan, Neopentan und/oder Hexan. Vorzugsweise wird ein handelsübliches Pentan-Gemisch verwendet.

Als weitere Zusatzstoffe können die expandierbaren Formmassen übliche Farbstoffe, Füllstoffe, Stabilisatoren, Flammschutzmittel, Synergisten, Keimbildner, Gleitmittel und dergleichen in üblichen wirksamen Mengen enthalten.

Die Herstellung der perlförmigen expandierbaren Formmassen erfolgt durch Suspensionspolymerisation. Dazu wird der Polyphenylenether oder ein Gemisch aus Polyphenylenether und Polystyrol, wie es als Handelsprodukt zugänglich ist, und gegebenenfalls das Styrol-Acrylnitril-Copolymere in Styrol gelöst, gegebenenfalls weitere Copolymere und gegebenenfalls der Vernetzer zugefügt und diese Lösung in wäßriger Suspension, zweckmäßig unter Zusatz eines üblichen Suspendierhilfsmittels, polymerisiert. Das Treibmittel wird dabei bereits bei der Polymerisation mit vorgelegt oder im Laufe der Polymerisation zugefügt. Es kann aber auch erst nach beendeter Polymerisation dem Ansatz zugefügt werden. Die erhaltenen perlförmigen expandierbaren Polymerisate werden danach von der wäßrigen Phase abgetrennt, gewaschen und getrocknet.

Die expandierbaren Formmassen können in bekannter Weise in üblichen Vorschäumern mit Heißluft oder Dampf zu perlförmigen Schaumstoffpartikeln aufgeschäumt werden. Die Schaumstoffperlen können in an sich bekannter Weise durch Erhitzen in nicht gasdicht schließenden Formel zu Formkörpern verschweißt werden.

### Die in den Beispielen genannten Teile sind Gewichtsteile

### Beispiel 1 (Vergleich)

In einem druckfesten Rührkessel wurde eine Mischung aus 200 Teilen Wasser, 0,1 Teilen Natriumpyrophosphat, 0,15 Teilen tert.Butylperbenzoat, 0,45 Teilen Benzoylperoxid, 100 Teilen einer Lösung von 5 Teilen eines Blends aus Poly-(2,6-dimethyl)-1,4-phenylenoxid und Polystyrol (Gewichtsverhältnis 80:20) und 0,01 Teilen Divinylbenzol in 95 Teilen Styrol, 7 Teilen Pentan und 3 Teilen einer 10%igen wäßrigen Lösung von Polyvinylpyrrolidon unter Rühren auf 90°C erhitzt, 5 Stunden bei 90°C gehalten und anschließend 2 Stunden bei 100°C und weitere 2 Stunden auf 120°C erhitzt. Nach dem Abkühlen wurde das erhaltene Perlpolymerisat mit einem mittleren Perlendurchmesser von 0,8 mm von der wäßrigen Phase abgetrennt, gewaschen und getrocknet. Das so erhaltene Produkt wurde in einem handelsüblichen kontinuierlichen Rührvorschäumer, Typ Rauscher, mit strömendem Wasserdampf zu Schaumstoffperlen (Schüttgewicht 20 g/l) aufgeschäumt. Nach 24 Stunden Zwischenlagerung wurden die Schaumstoffperlen in eine Blockform, Typ Rauscher, eingefüllt und durch Bedampfen mit Wasserdampf von 1,8 bar während 20 Sekunden zu einem Block verschweißt. Der Schaumstoff zeigte sich im Inneren als völlig frei von Lunkern und Fehlstellen. Die Wärmeformbeständigkeit nach DIN 53 424 betrug 111°C.

Im vergleich dazu zeigte ein nach der Lehre der JP-A-52 301 268 aus einem entsprechenden Polystyrol-Polyphenylenether-Granulat durch Nachimprägnierung mit Pentan, anschließendes Aufschäumen und Verschweißen in einer Form hergestellter Schaumstoff im Inneren eine Vielzahl von Lunkern und Fehlstellen.

### Beispiel 2 (Vergleich)

Es wurde wie in Beispiel 1, jedoch ohne Mitverwendung von Divinylbenzol gearbeitet. Der erhaltene Schaumstoff war im Inneren völlig frei von Lunkern und Fehlstellen. Die Wärmeformbeständigkeit nach DIN 53 424 betrug 108°C.

### Beispiel 3 (Vergleich)

Es wurde wie in Beispiel 1 gearbeitet, jedoch 100 Teile einer Lösung von 10 Teilen eines Blends aus Poly-(2,6-dimethyl)-1,4-phenylenoxid und Polystyrol (Gewichtsverhähltnis 80:20) und 0,01 Teilen Divinylbenzol in 90 Teilen Styrol verwendet. Der erhaltene Schaumstoff war völlig frei von Lunkern und Fehlstellen. Die Wärmeformbeständigkeit betrug 120°C.

### Beispiel 4 (Vergleich)

Es wurde wie in Beispiel 3, jedoch ohne Mitverwendung von Divinylbenzol gearbeitet. Der Schaumstoff war völlig frei von Lunkern und Fehlstellen. Die Wärmeformbeständigkeit betrug 115°C.

### Beispiel 5 (Vergleich)

Es wurde wie in Beispiel 1, jedoch ohne Mitverwendung von Poly-(2,6-dimethyl)-1,4-phenylenoxid gearbeitet. Der Schaumstoff zeigte eine Wärmeformbeständigkeit von 102°C.

### Beispiel 6

Es wurde wie in Beispiel 1 gearbeitet, jedoch 100 Teile einer Lösung von 5 Teilen eines Blends aus Poly-(2,6-dimethyl)-1,4-phenylenoxid und Polystyrol (Gewichtsverhältnis 80 : 20) und 25 Teilen eines Styrol-Acrylnitril-Copolymeren (70/30 Gew.%) und 0,01 Teilen Divinylbenzol in 70 Teilen Styrol verwendet.

Die Wärmeformbeständigkeit des Schaumstoffs beträgt 112°C. Zur Prüfung der Ölbeständigkeit wurden in Anlehnung an DIN 53428 Proben des Schaumstoffs (5 x 5 x 5 cm) in Heizöl und in Dieselöl gelagert. Nach 72-stündiger Lagerung war der Schaumstoff unverändert.

### Beispiel 7

Es wurde wie in Beispiel 6, jedoch ohne Mitverwendung von Divinylbenzol gearbeitet.

Die Wärmeformbeständigkeit des Schaumstoffs beträgt 110°C. Der Schaumstoff ist beständig gegenüber Heizöl und Dieselöl.

## Patentansprüche

1. Perlförmige expandierbare Formmassen mit hoher Wärmeformbeständigkeit, enthaltend
a) 80 bis 99 Gew.-% mindestens eines Styrolpolymerisats
b) 1 bis 20 Gew.-% Poly-(2,6-dimethyl)-1,4-phenylenether
c) 3 bis 10 Gew.-%, bezogen auf die Summe von a) und b) eines C₃- bis C₆-Kohlenwasserstoffs als Treibmittel, und gegebenenfalls
d) übliche Zusatzstoffe in wirksamen Mengen,
wobei als Komponente a) ein Gemisch verwendet wird aus
a1) 50 bis 83 Gew.-% Polystyrol und
b2) 17 bis 50 Gew.-% eines styrollöslichen Styrol-Acrylnitril-Copolymeren, wobei der Gehalt an Acrylnitril, bezogen auf die Summe von a1) und a2) mindestens 5 Gew.-% beträgt.

2. Perlförmige expandierbare Formmassen gemäß Anspruch 1, enthaltend als Komponente a) ein unter Mitverwendung von 0,005 bis 0,05 Mol-%, bezogen auf Styrol, eines Vernetzers hergestelltes Polystyrol.

3. Verfahren zur Herstellung expandierbarer Formmassen gemäß Anspruch 1, dadurch gekennzeichnet, daß man eine Lösung von Poly-(2,6-dimethyl)-1,4-phenylenether und Styrol-Acrylnitril-Copolymeren in Styrol in wäßriger Suspension in Gegenwart des Treibmittels polymerisiert und während oder nach der Polymerisation das Treibmittel zufügt.

## Claims

1. A bead-like expandable molding material having high heat distortion resistance and containing
a) from 80 to 99% by weight of one or more styrene polymers,
b) from 1 to 20% by weight of poly-(2,6-dimethyl)-1,4-phenylene ether and
c) from 3 to 10% by weight, based on the sum of a) and b), of a C₃-C₆-hydrocarbon as a blowing agent, with or without
d) conventional additives in effective amounts,
wherein a mixture of
a1) from 50 to 83% by weight of polystyrene and
a2) from 17 to 50% by weight of a styrene-soluble styrene/acrylonitrile copolymer in which the content of acrylonitrile is not less than 5% by weight, based on the sum of a1) and a2)
is used as component a).

2. A bead-like expandable molding material as claimed in claim 1, containing, as component a), a polystyrene prepared using from 0.005 to 0.05 mol %, based on styrene, of a crosslinking agent.

3. A process for the preparation of an expandable molding material as claimed in claim 1, wherein a solution of poly-(2,6-dimethyl)-1,4-phenylene ether and a styrene/acrylonitrile copolymer in styrene is polymerized in aqueous suspension in the presence of a blowing agent, and the blowing agent is added during or after the polymerization.

## Revendications

1. Matières à mouler expansibles en forme de perles à haute stabilité dimensionnelle à chaud contenant
a) 80 à 99 % en poids d'au moins un polymérisat de styrène
b) 1 à 20 % en poids de poly-(2,6-diméthyl)-1,4-phénylènéther
c) 3 à 10 % en poids, rapportés à la somme de a) et b), d'un hydrocarbure en C3 à C6 comme gonflant et éventuellement
d) des additifs usuels en quantités efficaces,
en utilisant comme composant a) un mélange de
a1) 50 à 83 % en poids de polystyrène et
b2) 17 à 50 % en poids d'une copolymère styrène-acrylonitrile soluble dans le styrène, la teneur en acrylonitrile, rapportée à la somme de a1) et a2) étant d'au moins 5 % en poids.

2. Matières à mouler expansibles en forme de perles selon la revendication 1 contenant comme composant a) un polystyrène préparé en utilisant conjointement de 0,005 à 0,005 mol %, rapporté au styrène, d'un agent de réticulation.

3. Procédé de préparation de matières à mouler expansibles en forme de perles selon la revendication 1, caractérisé par le fait que l'on polymérise en suspension aqueuse, en présence du gonflant une solution de poly-(2,6-diméthyl)-1,4-phénylènéther et copolymère styrène-acrylonitrile dans du styrène et on ajoute le gonflant pendant ou après la polymérisation.
